# EUROPEAN PATENT APPLICATION

(11) **EP 4 600 839 A1**
(43) Date of publication of application: **13.08.2025**
(21) Application number: 24795628.7
(22) Date of filing: 11.03.2024
(51) Int. Cl.: G06F 16/22

(54) **DATA TABLE PROCESSING METHOD AND APPARATUS OF DISTRIBUTED DATABASE, ELECTRONIC DEVICE, COMPUTER READABLE STORAGE MEDIUM, AND COMPUTER PROGRAM PRODUCT**

(30) Priority: 25.04.2023 CN 202310473395
(71) Applicant: Tencent Technology (Shenzhen) Company Limited, Shenzhen, Guangdong 518057 (CN)
(72) Inventor: LI, Shuo, Shenzhen, Guangdong 518057 (CN); ZHENG, Lixiong, Shenzhen, Guangdong 518057 (CN); PAN, Anqun, Shenzhen, Guangdong 518057 (CN); LEI, Hailin, Shenzhen, Guangdong 518057 (CN); WU, Xin, Shenzhen, Guangdong 518057 (CN); ZHANG, Qian, Shenzhen, Guangdong 518057 (CN)
(74) Representative: Nederlandsch Octrooibureau
(86) International application number: PCT/CN2024/081004
(87) International publication number: WO 2024/222244

(57) **Abstract**

The present application provides a data table processing method and apparatus of a distributed database, a device, and a storage medium. The distributed database comprises a plurality of nodes. The method comprises: obtaining a first data table and a second data table that are to be connected in a distributed database, wherein first data in the first data table and second data in the second data table are distributed and stored into the plurality of nodes; obtaining a first data distribution of the first data in the first data table and a second data distribution of the second data in the second data table; on the basis of the first data distribution and the second data distribution, performing partial replication, partial redistribution, and partial keeping-unchanged operations on full data composed of the first data and the second data to obtain operated first data and operated second data correspondingly; and performing a connection operation on the operated first data and the operated second data to obtain a connection result.

## Description

### RELATED APPLICATION

This application is proposed based on Chinese Patent Application No. 2023104733956, filed on April 25, 2023, and claims priority to the Chinese Patent Application, which is incorporated herein by reference in its entirety.

### FIELD OF THE TECHNOLOGY

The disclosure relates to the field of data processing and database technologies, and in particular, to a data table processing method and apparatus of a distributed database (DDB), an electronic device, a computer-readable storage medium, and a computer program product.

### BACKGROUND OF THE DISCLOSURE

A distributed database (DDB) generally uses a relatively small computer system. Each computer (also referred to as a node) may be separately placed. Each computer may have a complete copy or a partial copy of a database management system (DBMS), and has a local database. Many computers located in different locations may be interconnected each other through a network, to jointly form a complete, global, logically centralized, and physically distributed large database.

Data skew is a difficulty of the DDB. In the case of a specific data distribution, the data skew may cause some specific nodes in the DDB to process hundreds or even thousands of times more data than another node, which causes slow overall processing.

However, no effective solution on how to resolve a problem of the data skew in the DDB have been developed in the related art.

### SUMMARY

Embodiments of the disclosure provide a data table processing method and apparatus for a distributed database (DDB), an electronic device, a computer-readable storage medium, and a computer program product, which can solve a problem of data skew, thereby improving data processing efficiency.

Technical solutions in the embodiments of the disclosure are implemented as follows.

An embodiment of the disclosure provides a data table processing method for a DDB, performed by an electronic device, the DDB including a plurality of nodes, the method including:
obtaining a first data table and a second data table, first data in the first data table and second data in the second data table being stored at the plurality of nodes;
obtaining a first data distribution of the first data in the first data table and a second data distribution of the second data in the second data table;
performing, based on the first data distribution and the second data distribution, replication and/or redistribution, and/or keeping unchanged on full data including the first data and the second data, to obtain correspondingly treated first data and treated second data, respectively; and
combining the treated first data and the treated second data, to obtain a set of combined data.

An embodiment of the disclosure provides a data table processing apparatus of a DDB, the DDB including a plurality of nodes, the apparatus including:
an obtaining module, configured to obtain a first data table and a second data table, first data in the first data table and second data in the second data table being stored at the plurality of nodes;
the obtaining module being further configured to obtain a first data distribution of the first data in the first data table and a second data distribution of the second data in the second data table;
an operation module, configured to perform, based on the first data distribution and the second data distribution, replication and/or redistribution, and/or keeping unchanged on full data including the first data and the second data, to obtain correspondingly treated first data and treated second data, respectively; and
a join module, configured to combine the treated first data and the treated second data, to obtain a set of combined data.

An embodiment of the disclosure provides an electronic device, including:
a memory, configured to store an executable instruction; and
a processor, configured to implement the data table processing method for a DDB provided in the embodiments of the disclosure when executing the executable instruction stored in the memory.

An embodiment of the disclosure provides a computer-readable storage medium, having a computer-executable instruction stored therein, the computer-executable instruction, when executed by a processor, implementing the data table processing method for a DDB provided in the embodiments of the disclosure.

An embodiment of the disclosure provides a computer program product, including a computer program or a computer-executable instruction, the computer program or the computer-executable instruction, when executed by a processor, implementing the data table processing method for a DDB provided in the embodiments of the disclosure.

The embodiments of the disclosure have the following beneficial effects.

For the first data table and the second data table to be joined in the DDB, based on the first data distribution of the first data in the first data table and the second data distribution of the second data in the second data table, the operations of partial replication, partial redistribution, and partial keeping unchanged are performed on the full data including the first data and the second data. In this way, compared with the related art in which only a manner of redistribution or replication is used when the full data is redistributed, the technical solution provided in the embodiments of the disclosure uses the operations of partial replication, partial redistribution, and partial keeping unchanged to redistribute the full data based on different data distribution manners. In this way, the treated full data is evenly distributed in the plurality of nodes, which avoids the problem of data skew caused by replicating a large amount of data to the same node when the full data is redistributed in the related art, thereby further improving the data processing efficiency.

### BRIEF DESCRIPTION OF THE DRAWINGS

FIG. 1 is a schematic architectural diagram of a data table processing system 100 of a distributed database (DDB) according to an embodiment of the disclosure.
FIG. 2 is a schematic structural diagram of an electronic device 600 according to an embodiment of the disclosure.
FIG. 3 is a schematic flowchart of a data table processing method for a DDB according to an embodiment of the disclosure.
FIG. 4 is a schematic flowchart of a data table processing method for a DDB according to an embodiment of the disclosure.
FIG. 5 is a schematic diagram of correspondence between an execution time and a data skew according to an embodiment of the disclosure.
FIG. 6 is a schematic principle diagram of a data table processing method for a DDB provided in the related art.
FIG. 7 is a schematic principle diagram of a data table processing method for a DDB according to an embodiment of the disclosure.
FIG. 8 is a schematic principle diagram of a data table processing method for a DDB according to an embodiment of the disclosure.
FIG. 9 is a schematic principle diagram of a data table processing method for a DDB provided in the related art.
FIG. 10 is a schematic principle diagram of a data table processing method for a DDB according to an embodiment of the disclosure.
FIG. 11 is a schematic principle diagram of a data table processing method for a DDB according to an embodiment of the disclosure.
FIG. 12 is a schematic principle diagram of a data table processing method for a DDB according to an embodiment of the disclosure.
FIG. 13 is a schematic principle diagram of a data table processing method for a DDB according to an embodiment of the disclosure.
FIG. 14 is a schematic diagram of a comparison of effects according to an embodiment of the disclosure.

### DESCRIPTION OF EMBODIMENTS

To make objectives, technical solutions, and advantages of the disclosure clearer, the disclosure is described in further detail with reference to drawings. The described embodiments are not to be construed as a limitation on the disclosure. All other embodiments obtained by a person of ordinary skill in the art without creative efforts fall within the protection scope of the disclosure.

In the following description, a term "some embodiments" involved describes subsets of all possible embodiments, but "some embodiments" may be the same subset or different subsets of all of the possible embodiments, and may be combined with each other without conflicts.

In the embodiments of the disclosure, relevant data such as user information is involved. When the embodiments of the disclosure are applied to a specific product or technology, user permission or consent needs to be obtained, and acquiring, use, and processing of the relevant data need to comply with relevant laws, regulations, and standards of relevant countries and regions.

In the following description, a term "first/second/..." involved is merely configured for distinguishing between similar objects and does not represent a specific order of objects. "first/second/..." may be transposed for a specific order or a sequence when allowed, so that embodiments of the disclosure described herein can be implemented in an order other than those illustrated or described herein.

In the embodiments of the disclosure, a term "module" or "unit" refers to a computer program having a predetermined function or a part of a computer program, and operates together with other relevant parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or an overall unit including a function of the module or the unit.

Unless otherwise defined, meanings of all technical and scientific terms used in the embodiments of the disclosure are the same as those usually understood by a person skilled in the art to which the disclosure belongs. The terms used in this specification are merely intended to describe objectives of the embodiments of the disclosure, and are not intended to limit the embodiments of the disclosure.

Before the embodiments of the disclosure are further described in detail, a description is provided on nouns and terms in the embodiments of the disclosure, and the nouns and terms in the embodiments of the disclosure are applicable to the following explanations.
1) Distribution Key: It is a column (or a group of columns), and is configured to determine a database partition storing a particular data row. A column generally used as a query condition is selected as a distribution key, which may enable distribution key-based node pruning. If the distribution key is not specified when a table is created, a primary key of the data table is the distribution key by default. If the data table does not have a primary key, a first column is used as the distribution key by default.
2) Join key: It is a key configured to join data in two data tables. For example, for an order table and an order detail table, an order identifier may be used as a join key of the two data tables, to join order data in the two data tables.
3) Data table: It is a basic unit for organizing data in a distributed database (DDB), and the DDB may include a plurality of data tables.
4) In response to: It is configured for indicating a condition or a status on which one or more to-be-performed operations depend. When the condition or the status is satisfied, the one or more operations may be performed in real time or have a set delay. Unless otherwise specified, a sequence in which a plurality of operations are performed is not limited.
5) Data skew: It is a case in a DDB where some nodes process an excessively large data volume as a result of an uneven data distribution.
6) DDB: It generally uses a relatively small computer system. Each computer may be separately placed in a place. Each computer may have a complete copy or a partial copy of a database management system (DBMS), and has a local database. Many computers located in different locations are jointed with each other through a network, to jointly form a complete, global, logically centralized, and physically distributed large database.
7) Data Table: It is a grid virtual table (a table representing data in a memory) for temporarily storing data. The data table is a core object in a database, and can be simply bound to the database without code, and can be configured for storing specific data.

Data skew is a difficulty of the DDB. In the case of a specific data distribution, the data skew may cause some specific nodes in the DDB to process hundreds or even thousands of times more data than another node, which causes slow overall processing. In addition, there are various reasons for the data skew. For example, the data skew may include the following several reasons. The data in the data table is unevenly distributed and skewed. A value corresponding to the distribution key or the join key has a most common value (MCV). The data skew is caused by data association after a data join is performed or a group is performed. The data skew is caused by a particular predicate, for example, an equivalence condition. In addition, the data skew may cause the following several serious consequences: long tail phenomenon, for example, a node does not end, and an entire query is slowed down; a single node has insufficient resources, and another node has no data processing; a clear bottleneck of querying, causing huge resource consumption; and content of some nodes may be insufficient, causing an entire query failure.

Based on the above, the embodiments of the disclosure provide a data table processing method and apparatus of a DDB, an electronic device, a computer-readable storage medium, and a computer program product, which can solve the problem of data skew, thereby improving data processing efficiency. The electronic device provided in the embodiments of the disclosure is described below. The electronic device provided in the embodiments of the disclosure may be implemented as a server, or collaboratively implemented by a terminal device and a server. A description is provided below by using an example in which the terminal device and the server collaboratively implement the data table processing method for a DDB provided in the embodiments of the disclosure.

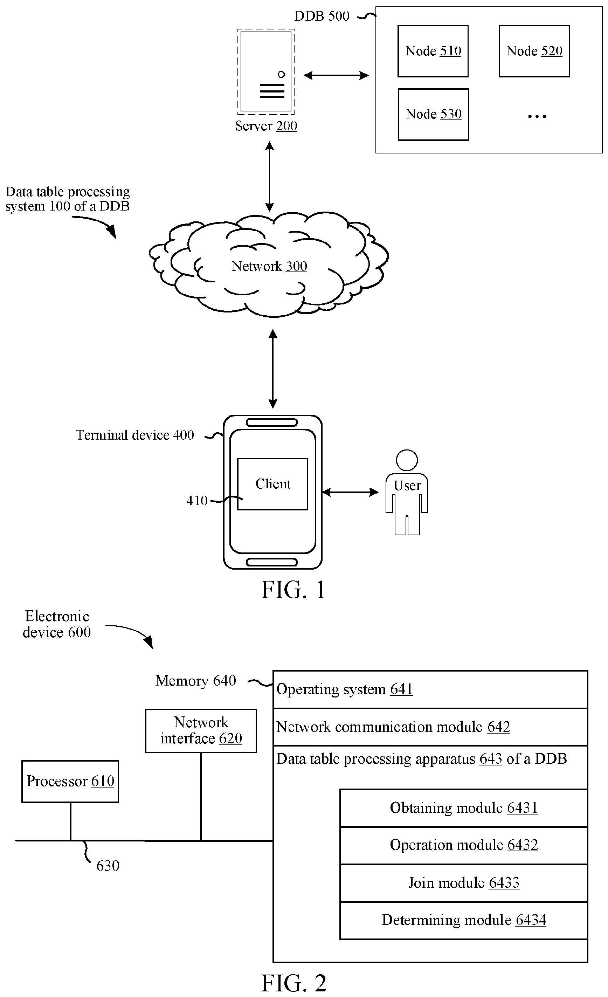

Exemplarily, FIG. 1 is a schematic architectural diagram of a data table processing system 100 of a DDB according to an embodiment of the disclosure. To implement an application that supports solving a problem of skewed data and improves data processing efficiency, as shown in FIG. 1, the data table processing system 100 of a DDB includes a server 200, a network 300, a terminal device 400, and a DDB 500. The network 300 may be a local area network, a wide area network, or a combination thereof. The terminal device 400 is a terminal device associated with a user. A client 410 is run on the terminal device 400. The client 410 may be various types of clients, for example, including a database application, a data table application, a browser, and the like. The DDB 500 includes a plurality of nodes, for example, including a node 510, a node 520, and a node 530.

In some or all embodiments, when a user needs to join two data tables in the DDB 500, identifiers (for example, names and numbers of the data tables) respectively corresponding to the two data tables may be entered on a human-computer interaction interface of a client 410. After receiving the identifier of the data table entered by the user, the client 410 may transmit the received identifier of the data table to the server 200 through the network 300, so that the server 200 obtains, from the DDB 500 based on the received identifier of the data table, a first data table (for example, a data table A) and a second data table (for example, a data table B) that correspond to the identifier of the data table. Next, the server 200 may further obtain a first data distribution (for example, whether a distribution key of the first data table is a join key, and whether corresponding data of the join key in the first data table includes most common data) of the first data in the first data table and second data distribution (for example, whether a distribution key of the second data table is a join key, and whether corresponding data of the join key in the second data table includes most common data) of the second data in the second data table. Subsequently, the server 200 may perform, based on the first data distribution and the second data distribution, operations of partial duplication, partial redistribution, and partial keeping unchanged on full data formed by the first data in the first data table and the second data in the second data table. Finally, the server 200 performs a join/ comnbination operation on the treated first data and the treated second data, to obtain a join result, and returns the join result to the terminal device 400 through the network 300, so that the terminal device 400 invokes the human-computer interaction interface of the client 410 for presentation.

The data table processing method for a DDB provided in this embodiment of the disclosure may alternatively be implemented by the DDB. For example, when the first data table and the second data table are joined, a data redistribution operation and a join operation may be implemented through a bottom-layer capability of the DDB, which is not specifically limited in this embodiment of the disclosure.

In some other or all embodiments, this embodiment of the disclosure may further be implemented through a cloud technology. The cloud technology is a hosting technology that unifies a series of resources such as hardware, software, and a network in a wide area network or a local area network to realize data computing, storage, processing, and sharing.

The cloud technology is a general term for a network technology, an information technology, an integration technology, a management platform technology, an application technology, and the like based on an application of a cloud computing business model, may form a resource pool, and may be used as required, which is flexible and convenient. A cloud computing technology becomes an important support. A background service of a technical network system requires a large amount of computing and storage resources.

Exemplarily, the server 200 in FIG. 1 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal device 400 may be a smart phone, a tablet computer, a notebook computer, a desktop computer, a smart speaker, a smartwatch, an onboard terminal, or the like, which is not limited thereto. The terminal device 400 and the server 200 may be directly or indirectly joined through wired or wireless communication, which is not limited in this embodiment of the disclosure.

In some or all embodiments, the data table processing method for a DDB provided in this embodiment of the disclosure may alternatively be implemented through a block chain technology. For example, the first data in the first data table and the second data in the second data table may be distributed and stored into different nodes of a block chain network. Based on a feature that a block chain cannot be tampered, data security may be ensured.

A structure of the electronic device provided in the embodiments of the disclosure continues to be described below. An example is used in which the electronic device is a server. FIG. 2 is a schematic structural diagram of an electronic device 600 according to an embodiment of the disclosure. The electronic device 600 shown in FIG. 2 includes at least one processor 610, a memory 640, and at least one network interface 620. Components in the electronic device 600 are coupled together through a bus system 630. The bus system 630 is configured to implement connection and communication between the components. In addition to a data bus, the bus system 630 further includes a power bus, a control bus, and a state signal bus. However, for clarity of description, all types of buses in FIG. 2 are marked as the bus system 630.

The processor 610 may be an integrated circuit chip with a signal processing capability, for example, a general processor, a digital signal processor (DSP), another programmable logic device, a discrete gate or a transistor logic device, a discrete hardware component, or the like. The general processor may be a microprocessor, any conventional processor, or the like.

The memory 640 may be removable, non-removable, or a combination thereof. An exemplary hardware device includes a solid-state memory, a hard disk driver, an optical disk driver, and the like. In some or all embodiments, the memory 640 includes one or more storage devices at a physical location away from the processor 610.

The memory 640 includes a volatile memory or a non-volatile memory, or may include both a volatile memory and a non-volatile memory. The non-volatile memory may be a read-only memory (ROM), and the volatile memory may be a random access memory (RAM). The memory 640 described in this embodiment of the disclosure is intended to include any suitable type of memory.

In some or all embodiments, the memory 640 can store data to support various operations. Examples of the data include a program, a module, and a data structure, or a subset or a superset thereof. An exemplary description is provided below.

An operating system 641 includes system programs configured to process basic system services and perform hardware-related tasks, for example, a frame layer, a core library layer, and a drive layer, and is configured to implement basic services and process hardware-based tasks.

A network communication module 642 is configured to reach another computing device through one or more (wired or wireless) network interfaces 620. Exemplary network interfaces 620 include a Bluetooth interface, a wireless compatibility authentication (Wi-Fi) interface, a universal serial bus (USB) interface, and the like.

In some or all embodiments, an apparatus provided in this embodiment of the disclosure may be implemented by software. FIG. 2 shows a data table processing apparatus 643 of a DDB stored in a memory 640, which may be software in the form of programs and plug-ins, including the following software modules: an obtaining module 6431, an operation module 6432, a join module 6433, and a determination module 6434. The modules are logical modules. Therefore, the modules may be combined in different manners or further split based on functions to be implemented by the modules. In FIG. 2, for ease of description, all the foregoing modules are shown at one time. However, it is not to be considered that an implementation in which the data table processing apparatus 643 of a DDB may include only the obtaining module 6431, the operation module 6432, and the join module 6433 is excluded. Functions of the modules are described below.

The data table processing method for a DDB provided in the embodiments of the disclosure is described in detail below with reference to exemplary applications and implementations of the server provided in the embodiments of the disclosure.

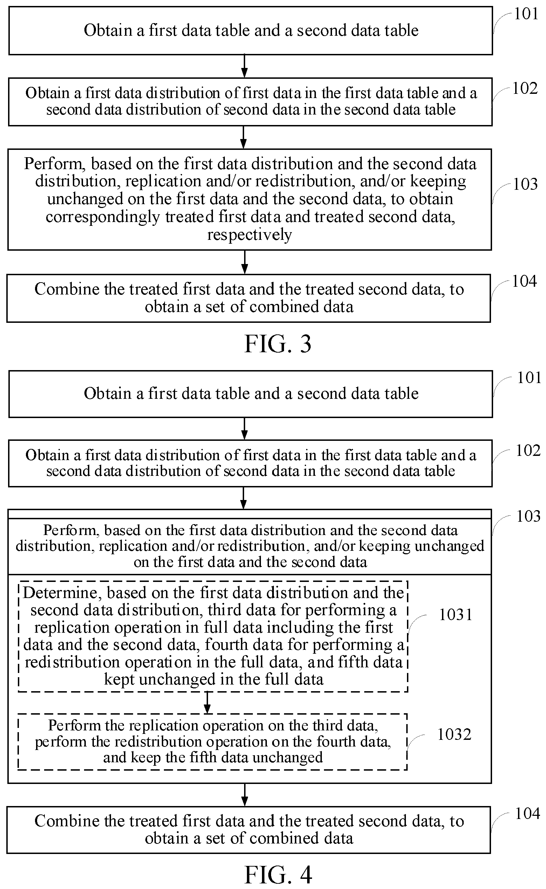

Exemplarily, FIG. 3 is a schematic flowchart of a data table processing method for a DDB according to an embodiment of the disclosure, which is to be described with reference to operations shown in FIG. 3.

Operation 101: Obtain a first data table and a second data table.

The first data table and the second data table are to be joined in the DDB. First data in the first data table and second data in the second data table herein may be distributed and stored at a plurality of nodes in the DDB. For example, the first data and the second may be distributed (i.e., stored in a distributed manner) into the nodes.

Exemplarily, the first data in the first data table is used as an example. When the first data is sales data of a supermarket A, sales data of different commodities in the supermarket A may be distributed and stored into the plurality of nodes in the DDB. For example, assuming that the sales data of the supermarket A includes sales data of fresh food, sales data of electric appliances, and sales data of clothing, the sales data of fresh food in the supermarket A may be stored into a node 1 in the DDB, the sales data of electric appliances in the supermarket A may be stored into a node 2 in the DDB, and the sales data of clothing in the supermarket A may be stored into a node 3 in the DDB. In other words, the foregoing distribution storage of the first data may be a result of different data types. Certainly, different physical locations of computer rooms may lead to the distribution storage of the first data. For example, an example in which the first data is data of Group A is used. Assuming that Group A includes a plurality of subsidiaries, and different subsidiaries are located at different physical locations, data of the different subsidiaries may be distributed and stored into different nodes of the DDB. For example, data of a subsidiary 1 may be stored into a node 1 of the DDB, and data of a subsidiary 2 may be stored into a node 2 of the DDB. Alternatively, the distribution storage of the first data may be caused by the first data being divided based on a fixed data volume. For example, when a data volume of the first data is greater than a data volume threshold, the first data may be divided based on the fixed data volume, and a plurality of pieces of sub-data obtained through division may be distributed and stored into different nodes of the DDB, which is not specifically limited in this embodiment of the disclosure.

In some or all embodiments, the first data table (such as a data table A) is used as an example. After one or more columns are selected from the first data table as distribution keys, a hash operation may be performed on a data column based on the distribution keys, and data of the column is stored into a node corresponding to a calculated hash value. For example, a CdbHash structure may be first created through CdbHash*makeCdbHash (int numsegs, int natts, and Oid*hashfunctions), then the following operations are performed on each column (tuple) to calculate a hash value corresponding to the column, and a node (segment) to which data of the column is to be distributed is determined. An initialization operation is first performed, which means that only an initial hash value is initialized, then a hashDatum() function is invoked to perform different preprocessing for different types, then a processed column value is added to hash calculation, and finally the hash value is mapped to a certain node.

The first data in the first data table may be distributed and stored into the plurality of nodes in the DDB through a hash distribution, and the first data in the first data table may be further distributed and stored into the plurality of nodes through a random distribution. For example, the first data in the first data table may be randomly distributed to different nodes in the DDB. In this case, the same data is stored into different nodes, which is not specifically limited in this embodiment of the disclosure.

In addition, the first data table and the second data table in this embodiment of the disclosure may be join results obtained after a plurality of (2 or more than 2) data tables are joined. For example, when the data table A, a data table B, and a data table C need to be joined in sequence, the data table A and the data table B may be first joined to obtain a join result (corresponding to the first data table), and then the join result continues to be joined to the data table C (corresponding to the second data table), which is not specifically limited in this embodiment of the disclosure.

Operation 102: Obtain a first data distribution of the first data in the first data table and a second data distribution of the second data in the second data table.

In some or all embodiments, the first data distribution of the first data in the first data table may refer to whether the distribution key of the first data table is a join key, and whether data corresponding to the join key in the first data table includes most common data. Similarly, the second data distribution of the second data in the second data table may refer to whether a distribution key of the second data table is the join key, and whether data corresponding to the join key in the second data table includes the most common data.

Exemplarily, an example in which the first data table is the data table A and the second data table is the data table B is used. A data distribution of the data table A and a data distribution of the data table B may be respectively obtained. For example, it is determined whether a distribution key of the data table A is a join key, and whether data corresponding to the join key in the data table A includes most common data, and it is determined whether a distribution key of the data table B is a join key, and whether data corresponding to the join key in the data table B includes most common data.

When the first data table (for example, the data table A) and the second data table (for example, the data table B) are joined, the join key needs to be specified. Next, whether the join key specified by a user and a distribution key used when data is distributed and stored are the same key may be determined. For example, if the join key and the distribution key are the same key, the distribution key is the join key. If the join key and the distribution key are not the same key, the distributed key is not the join key. In addition, a process of determining whether the data table includes most common data may be: determining whether the data corresponding to the join key that has occurred in the data table is greater than a threshold number of times (for example, 5000 times). If yes, the data table includes the most common data; and if no, the data table does not include the most common data.

For example, an example in which the data table A is an order table and the data table B is an order detail table is used. It is assumed that the order table distributes and stores data in a plurality of nodes by using an order number as the distribution key, and the order detail table distributes and stores data in the plurality of nodes by using a product name as the distribution key. In addition, assuming that the order table and the order detail table currently need to be joined based on the product name (that is, a join key), it may be determined that the distribution key of the order table is not the join key, and the distribution key of the order detail table is the join key. In addition, the order table is used as an example. When the join key is the product name, whether the most common data exists in the order table may be determined based on a number of data (for example, purchase records respectively corresponding to different products) corresponding to the join key occurs in the order table. For example, assuming that a number of a purchase record of a product A occurs in the order table is greater than a threshold number of times (for example, 5000 times), for example, assuming that 6000 purchase records of the product A exist in the order table, it may be determined that the order table includes the most common data.

Operation 103: Perform, based on the first data distribution and the second data distribution, replication and/or redistribution, and/or keeping unchanged on the first data and the second data, to obtain correspondingly treated first data and treated second data, respectively.

The replication can be performed to a first portion of the first data and the second data (i.e., the third data described below). Therefore, the replication may be considered as partial replication that is a replication processing performed to a portion of the first data and the second data. The redistribution can be performed to a second portion of the first data and the second data (i.e., the fourth data described below). Therefore, the redistribution may be considered as partial redistribution that is a redistribution processing performed to a portion of the first data and the second data. The keeping unchanged operation can be performed to a third portion of the first data and the second data (i.e., the fifth data described below). In some or all embodiments, FIG. 4 is a schematic flowchart of a data table processing method for a DDB according to an embodiment of the disclosure. As shown in FIG. 4, operation 103 shown in FIG. 3 can be implemented by operation 1031 and operation 1032 shown in FIG. 4, and description is made with reference to operations shown in FIG. 4.

Operation 1031: Determine, based on the first data distribution and the second data distribution, third data for performing a replication operation in the full data including the first data and the second data, fourth data for performing a redistribution operation in the full data, and fifth data kept unchanged in the full data.

The third data, the fourth data, and the fifth data in this embodiment of the disclosure do not specifically refer to a piece of data, but are collectively referred to as a type of data. In some or all embodiments, the third data and the fifth data may be the same or different. In other words, in this embodiment of the disclosure, the plurality of pieces of data for performing the replication operation is collectively referred to as the third data, the plurality of pieces of data for performing the redistribution operation is collectively referred to as the fourth data, and the plurality of pieces of data whose distribution manner remains unchanged is collectively referred to as the fifth data.

**In** some or all embodiments, operation 1031 may be implemented in the following manner: performing the following processes in response to a distribution key of each of the first data table and the second data table being not a join key, and data corresponding to the join key in one of the data tables including most common data, the most common data being data that has occurred more than a threshold number of times (for example, 5000): using, as the third data for performing the replication operation, data (for example, data the same as the most common data) in a non-target data table that matches the most common data, the non-target data table being a data table that does not include the most common data in the first data table and the second data table; using, as the fourth data for performing the redistribution operation, data in a target data table other than the most common data and data in the non-target data table other than the data matching the most common data, the target data table being a data table including the most common data in the first data table and the second data table; and using the most common data as the fifth data kept unchanged.

Exemplarily, an example in which the first data table is a data table A and the second data table is a data table B is used. Assuming that distribution keys of the data table A and the data table B are not join keys, and data corresponding to the join key in the data table A includes the most common data, data in the data table B that matches the most common data may be used as the third data for performing the replication operation. For example, assuming that the most common data in the data table A is (1, 3, 5), "1" appears in the data table A for 5100 times, "3" appears in the data table A for 5500 times, and "5" appears in the data table A for 5400 times, (1, 3, 5) in the data table B may be used as the data in the data table A that matches the most common data, that is, the third data for performing the replication operation. Data in the data table A other than the most common data and data in the data table B other than the data matching the most common data are used as the fourth data for performing the redistribution operation. In other words, data in the data table A other than (1, 3, 5) and data in the data table B other than (1, 3, 5) are used as the fourth data for performing the redistribution operation. (1, 3, 5) in the data table A is used as the fifth data whose distribution manner remains unchanged. In such case, the third data and the fifth data may be the same. In other words, when the distribution keys of the two data tables are not the join keys and the join key of one of the two data tables includes the most common data, for the data table including the most common data, because the distribution key is not the join key, it may be considered that the most common data is evenly distributed on a plurality of nodes. Therefore, the most common data does not need to be redistributed, and only the replication operation (for example, broadcast to all nodes) needs to be performed on the data in the other data table that matches the most common data. In this way, because the most common data is not redistributed, it is avoided that a large amount of data is redistributed to the same node. In addition, because the most common data has a relatively large data volume, the most common data is not redistributed, thereby reducing data movement.

In some other or all embodiments, operation 1031 described above may further be implemented in the following manner: performing the following processes in response to a distribution key of each of the first data table and the second data table being not a join key, data corresponding to the join key in the first data table including first most common data, data corresponding to the join key in the second data table including second most common data, the first most common data being data that has occurred more than a threshold number of times in the first data table, the second most common data being data that has occurred more than the threshold number of times in the second data table, and no overlap existing between the first most common data and the second most common data: using, as the third data for performing the replication operation, the data in the first data table that matches the second most common data and the data in the second data table that matches the first most common data; using, as the fourth data for performing the redistribution operation, data in the first data table other than the first most common data and the data that matches the second most common data, and data in the second data table other than the second most common data and the data that matches the first most common data; and using the first most common data and the second most common data as the fifth data kept unchanged.

Exemplarily, an example in which the first data table is the data table A and the second data table is the data table B is used. Assuming that distribution keys of the data table A and the data table B are not join keys, data corresponding to the join key in the data table A includes first most common data, data corresponding to the join key in the data table B includes second most common data, and an overlap does not exist between the first most common data and the second most common data, the data in the data table A that matches the second most common data and the data in the data table B that matches the first most common data may be used as the third data for performing the replication operation. Data in the data table A other than the first most common data and the data matching the second most common data and data in the data table B other than the second most common data and the data matching the first most common data are used as the fourth data for performing the redistribution operation. The first most common data and the second most common data are used as the fifth data whose distribution manner remains unchanged. For example, assuming that first most common data in the data table A is (1, 3, 5), and the second most common data in the data table B is (2, 4), (2, 4) in the data table A may be used as the data matching the second most common data, and (1, 3, 5) in the data table B may be used as the data matching the first most common data. Using, as the fourth data for performing the redistribution operation, data in the data table A other than (1, 2, 3, 4, 5) and data in the data table B other than (1, 2, 3, 4, 5); and using (1, 3, 5) in the data table A and (2, 4) in the data table B as the fifth data kept unchanged. In such case, the third data and the fifth data may be different. In other words, when the distribution keys of the two data tables are not the join keys, the join keys of the two data tables both include the most common data, and the most common data does not overlap, for the most common data, because the join key is not the distribution key and the most common data does not overlap, the most common data on this side may be considered to be evenly distributed on the plurality of nodes, so that redistribution is not needed, and the data that matches the most common data on an opposite side only needs to be replicated to all nodes. However, for processing of the non-most common data, the non-most common data may be redistributed to all nodes based on the join keys because the non-most common data is evenly distributed, which ensures an even distribution.

In some or all embodiments, operation 1031 described above may further be implemented in the following manner: performing the following processes in response to a distribution key in one of the first data table and the second data table being a join key, a distribution key of the other data table being not the join key, and data corresponding to the join key in a non-target data table including most common data, the non-target data table being a data table in which the distribution key in each of the first data table and the second data table is not the join key, and the most common data being data that has occurred in the non-target data table more than a threshold number of times: using, as the third data for performing the replication operation, data in a target data table that matches the most common data, the target data table being a data table in which the distribution key in the first data table and the second data table is the join key; using data in the non-target data table other than the most common data as the fourth data for performing the redistribution operation; and using, as the fifth data kept unchanged, the most common data and data in the target data table other than the data that matches the most common data.

Exemplarily, an example in which the first data table is the data table A and the second data table is the data table B is used. Assuming that the distribution key of the data table A is the join key, the distribution key of the data table B is not the join key, and data corresponding to the join key in the data table B includes the most common data, the data in the data table A that matches the most common data may be used as the third data for performing the replication operation. Data in the data table B other than the most common data is used as the fourth data for performing the redistribution operation. The most common data and data in the data table A other than the data that matches the most common data are used as the fifth data whose distribution manner keeps unchanged. For example, assuming that the most common data is (1, 3, 5), (1, 3, 5) may be used as the data in the data table A that matches the most common data. Data in the data table B other than (1, 3, 5) is used as the fourth data for performing the redistribution operation. (1, 3, 5) in the data table B and data in the data table A other than (1, 3, 5) are used as the fifth data whose distribution manner remains unchanged. In such case, the third data and the fifth data may be partially the same. In other words, when the distribution key of one data table is the join key, the distribution key of the other data table is not the join key, and the data table on one side where the join key is not the distribution key includes the most common data, for the most common data, it may be considered that the most common data is evenly distributed in the plurality of nodes for the data table on one side where the join key is the distribution key. Therefore, the most common data may be kept local. For the data in the data table that matches the most common data on one side where the join key is not the distribution key, the data needs to be replicated to all nodes. For the non-most common data, because the non-most common data is evenly distributed, the non-most common data in the data table on one side where the distribution key is the join key may be kept local, and the non-most common data in the data table on the other side is redistributed based on the join key.

In some other or all embodiments, operation 1031 described above may further be implemented in the following manner: performing the following processes in response to a distribution key of each of the first data table and the second data table being not a join key, data corresponding to the join key in the first data table including first most common data, data corresponding to the join key in the second data table including second most common data, and no overlap existing between the first most common data and the second most common data: using, as the third data for performing the replication operation, data in the first data table and the second data table that matches the most common data in a non-overlapping part; using most common data of an overlapping part and remaining data in the first data table and the second data table as the fourth data for performing the redistribution operation, the remaining data being data in the first data table and the second data table other than the first most common data, the second most common data, and the data that matches the most common data of the non-overlapping part; and using the most common data of the non-overlapping part as the fifth data kept unchanged.

Exemplarily, an example in which the first data table is the data table A and the second data table is the data table B is used. Assuming that the distribution keys of the data table A and the data table B are not the join keys, the data corresponding to the join key in the data table A includes the first most common data, which is assumed to be (1, 3, 5), the data corresponding to the join key in the data table B includes the second most common data, which is assumed to be (2, 3, 4), and an overlap does not exist between the first most common data and the second most common data, that is, data (3), the data in the data table A and the data table B that matches the most common data of the non-overlapping part may be used as the third data for performing the replication operation. In other words, (2, 4) in the data table A and (1, 5) in the data table B are used as the third data for performing the replication operation. The most common data of the overlapping part and the remaining data in the data table A and the data table B are used as the fourth data for performing the redistribution operation. In such case, the third data and the fifth data may be the same. In other words, the most common data (3) of the overlapping part, data other than (1, 2, 3, 4, 5) in the data table A, and data other than (1, 2, 3, 4, 5) in the data table B are used as the fourth data for performing the redistribution operation. The most common data of the non-overlapping part is used as the fifth data kept unchanged. In other words, (1, 5) in the data table A and (2, 4) in the data table B are used as the fifth data whose distribution manner remains unchanged. In other words, for a case in which the distribution keys of the two data tables are not the join keys, the join keys of the two data tables include the most common data, and the most common data overlaps, the join keys are not the distribution keys and overlap, the operation of redistribution or replication performed on the most common data is limited for the most common data. Therefore, the most common data in the overlapping part may be redistributed, so that the most common data goes to different nodes, to ensure that data volumes processed by the nodes are substantially even.

The most common data in this embodiment of the disclosure does not specifically refer to a certain piece of data, but is a general term for a certain type of data. For example, data that has occurred in the data table more than a threshold number of times may be collectively referred to as most common data. In other words, the most common data is a set of data that has occurred more than the threshold number of times.

In some other or all embodiments, operation 1031 described above may further be implemented in the following manner: performing the following processes in response to a distribution key of one of the first data table and the second data table being a join key, a distribution key of the other data table being not the join key, and data corresponding to the join key in a target data table including most common data, the target data table being a data table in which the distribution key in each of the first data table and the second data table is the join key, and the most common data being data that has occurred in the target data table more than a threshold number of times: using, as third data for performing a replication operation, the most common data and data in a non-target data table that matches the most common data, the non-target data table being a data table in which the distribution key in each of the first data table and the second data table is not a join key; using, as fourth data for performing a redistribution operation, data in the non-target data table other than the data that matches the most common data; and using data in the target data table other than the most common data as fifth data that remains unchanged.

Exemplarily, an example in which the first data table is the data table A and the second data table is the data table B is used. Assuming that the distribution key of the data table A is a join key, the distribution key of the data table B is not a join key, and the data corresponding to the join key in the data table A includes most common data, the most common data and the data in the data table B that matches the most common data may be used as the third data for performing the replication operation. Data in the data table B other than the data that matches the most common data is used as fourth data for performing a redistribution operation. Data in the data table A other than the most common data is used as fifth data that remains unchanged. For example, an example in which the most common data is (1, 3, 5) is used. (1, 3, 5) in the data table A and (1, 3, 5) in the data table B may be used as the third data for performing the replication operation; data in the data table B other than (1, 3, 5) is used as the fourth data for performing the redistribution operation; and data in the data table A other than (1, 3, 5) is used as the fifth data whose distribution manner remains unchanged. In such case, the third data and the fifth data may be different. In other words, in a case that the distribution key of one data table is the join key, the distribution key of the other data table is not the join key, and the data table whose distribution key is the join key includes the most common data, polling and replication may be performed on the most common data. For example, a first piece of data may be transmitted to a first node, a second piece of data is transmitted to a second node, and so on, thereby ensuring an even distribution of data, and data that matches the most common data in the data table on one side where the distribution key is not the join key may be replicated to all nodes. For non-most common data, since the non-most common data is evenly distributed, non-most common data in the data table on one side where the distribution key is the join key may be kept local, and non-most common data in the data table on the other side is redistributed based on the join key.

Operation 1032: Perform the replication operation on the third data, perform the redistribution operation on the fourth data, and keep the fifth data unchanged.

In some or all embodiments, for a case that the distribution keys for both the first data table and the second data table are not the join keys, and the data corresponding to the join key in one of the data tables includes the most common data, or a distribution key in each of the first data table and the second data table is not a join key, data corresponding to the join key in the first data table includes first most common data, data corresponding to the join key in the second data table includes second most common data, and an overlap exists between the first most common data and the second most common data; or the distribution key of one of the first data table and the second data table is the join key, the distribution key of the other data table is not the join key, and the data corresponding to the join key in the non-target data table (to be specific, a data table whose distribution key is not the join key) includes the most common data, the foregoing operation 1032 may be implemented in the following manner: replicating the third data to each of the nodes; redistributing the fourth data among the plurality of nodes based on the join key; and keeping a distribution manner of the fifth data in the plurality of nodes unchanged.

Exemplarily, for the third data identified from the full data, the third data may be transmitted to all the nodes by broadcasting, to store complete third data in each node in the DDB. For the fourth data identified from the full data, the fourth data may be redistributed to the plurality of nodes based on the join key. Certainly, data in the data table may alternatively be kept unchanged, and data in the other data table is replicated to all nodes. For the fifth data, the distribution manner of the fifth data in the plurality of nodes may be kept unchanged.

In some other or all embodiments, for a case in which a distribution key in each of the first data table and the second data table is not a join key, data corresponding to the join key in the first data table includes first most common data, data corresponding to the join key in the second data table includes second most common data, and an overlap exists between the first most common data and the second most common data, the foregoing operation 1032 may be implemented in the following manner: replicating the third data to each of the nodes; redistributing the most common data of the overlapping part in the fourth data to the plurality of nodes, to cause the most common data of the overlapping part to be evenly distributed in the plurality of nodes, and redistributing the remaining data in the fourth data among the plurality of nodes based on the join key; and keeping a distribution manner of the fifth data in the plurality of nodes unchanged.

Exemplarily, for the third data identified from the full data, the third data may be transmitted to all the nodes in the DDB by broadcasting, to store one piece of complete third data in each node.

Exemplarily, for the fourth data identified from the full data, the fourth data including the most common data of the overlapping part and the remaining data (that is, the data in the first data table and the second data table other than the first most common data, the second most common data, and the data matching the most common data of the non-overlapping part), and the most common data of the overlapping part, the most common data of the overlapping part may be redistributed to the plurality of nodes based on a set rule, so that the most common data of the overlapping part is evenly distributed in the plurality of nodes. For example, the most common data of the overlapping part may be redistributed to the plurality of nodes in a polling and replicating manner. For example, it is assumed that the most common data in the overlapping part includes 500 pieces of data, and the plurality of nodes are 10 nodes, the 1^{st} piece of data in the 500 pieces of data may be transmitted to the 1^{st} node (that is, the 1^{st} piece of data is stored to the 1^{st} node), a 2^{nd} piece of data is transmitted to the 2^{nd} node (that is, the 2^{nd} piece of data is stored to the 2^{nd} node), and so on. A 10^{th} piece of data is transmitted to a 10^{th} node. For an 11^{th} piece of data, the 11^{th} piece of data may be transmitted to the 1^{st} node again. In this way, it may be ensured that the most common data in the overlapping part is evenly distributed in the plurality of nodes, which avoids generation of a problem of data skew.

For the remaining data included in the fourth data, the remaining data may be redistributed to the plurality of nodes based on the join key. For example, the join key may be used as a classification criterion to classify the remaining data, and different types of data are respectively stored into different nodes. In other words, one node stores only one type of data. For example, an example in which the join key is a product name is used. The remaining data (for example, purchase records respectively corresponding to a plurality of products) may be first classified based on the product name, and purchase records of different types of products are respectively stored into different nodes. For example, a purchase record of a fresh food product may be stored into the 1^{st} node, a purchase record of a costume product may be stored into the 2^{nd} node, and a purchase record of an electronic product may be stored into the 3^{rd} node. In other words, one node stores a purchase record of only one type of product.

Exemplarily, for the fifth data identified from the full data, the distribution manner of the fifth data in the plurality of nodes remains unchanged.

In some or all embodiments, for a case in which the distribution key of one of the first data table and the second data table is the join key, the distribution key of the other data table is not the join key, and the data corresponding to the join key in the target data table includes the most common data, the foregoing operation 1032 may be implemented in the following manner: performing polling and replication on the most common data in the third data, and replicating, to each of the nodes, data in the third data that matches the most common data; redistributing the fourth data among the plurality of nodes based on the join key; and keeping a distribution manner of the fifth data in the plurality of nodes unchanged.

Exemplarily, the performing polling and replication on the most common data in the third data may be implemented in the following manner: letting n be an integer variable whose value increases from 1, a maximum value of n being N, N being a total quantity of pieces of data included in the most common data, and iterating n to perform the following processing: determining a remainder obtained by dividing n by M, replicating an n^{th} piece of data to a node corresponding to the remainder in the plurality of nodes, M being a total quantity of the plurality of nodes, and replicating data corresponding to the remainder to an M^{th} node when the remainder is 0.

In some other or all embodiments, the following processing may be further performed: replicating, to each of the nodes in response to a data volume of one of the first data table and the second data table being greater than a data volume threshold and a data volume of the other data table being less than the data volume threshold, data in the data table whose data volume is less than the data volume threshold.

Exemplarily, an example in which the first data table is the data table A and the second data table is the data table B is used. Assuming that a data volume of the data table A is greater than the data volume threshold, and a data volume of the data table B is less than the data volume threshold, i.e., the data table A is a large table and the data table B is a small table, the data in the data table B may be replicated to all nodes of the DDB. In other words, each node stores complete data in the data table B.

Operation 104: Combine the treated first data and the treated second data, to obtain a set of combined data.

Data combination/ join refers to a process of combining data from different data sources. A main objective of the combination/ join is to merge and integrate information from different data sources, so as to perform more in-depth analysis and decision-making. A join manner mainly includes: direct join (that is, a data source may be directly accessed and operated through a programming language, and data is obtained and combined by executing an appropriate query statement or written code), database join (when a plurality of databases are involved, data from different databases may be joined together through a join tool or an application programming interface (API)) provided by a DBMS, file join (data from different files may be joined together by reading and parsing files in a file system), and external system join (join may be performed to an external system, and needed information may be obtained by invoking functions or data of these systems).

Exemplarily, the treated first data and the treated second data may be combined in different join manners (for example, including an internal join and an external join). The join operation may be based on one or more common fields or keys, so as to establish a logical association between different data sources. A result of the data join may be a new data set having different columns or rows, which reflects a relationship and interaction between original data. The data join is a common operation in a data processing and analysis process, and may help a user discover an association and a mode between data, to support in-depth data analysis and decision-making.

In some or all embodiments, after the operations of partial replication, partial redistribution, and partial keeping unchanged are performed on the full data based on the first data distribution and the second data distribution, a join operation may be performed on the treated first data in the first data table and the treated second data in the second data table, to obtain a join result (a set of combined data). When a join to another data table (for example, a third data table) needs to be subsequently performed, the join result and the third data table may be joined. For a specific join process, reference may be made to the foregoing implementation. Details are not described herein again in this embodiment of the disclosure.

In the data table processing method for a DDB provided in this embodiment of the disclosure, for the first data table and the second data table to be joined in the DDB, the operations of partial replication, partial redistribution, and partial keeping unchanged are performed on the full data based on the first data distribution of the first data table and second data distribution of the second data table. In this way, the treated full data is evenly distributed in the plurality of nodes, which avoids a problem of data skew caused by replicating a large amount of data to the same node when full data is redistributed in the related art, thereby further improving data processing efficiency.

Next, an exemplary application of this embodiment of the disclosure in an actual application scene is to be described.

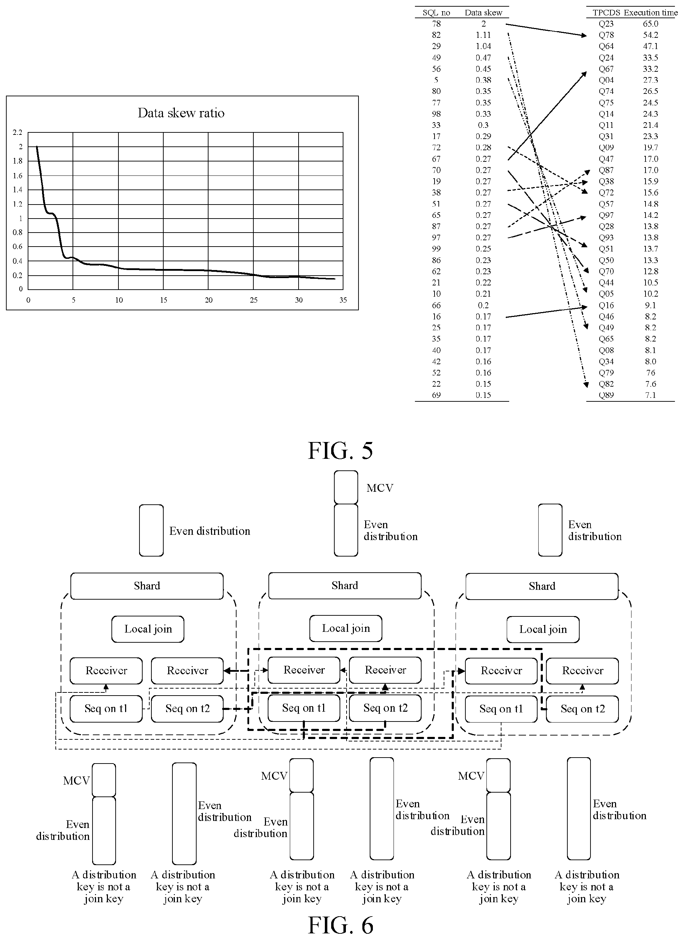

Data skew is a difficulty of the DDB. In the case of a specific data distribution, the data skew may cause some specific nodes in the DDB to process hundreds or even thousands of times more data than another node, which causes slow overall processing. Exemplarily, detection is performed on a universal database test set (for example, a transaction processing performance council decision support (TPCDS)). A result of detecting a data skew situation is shown in FIG. 5. A left figure represents a distribution situation of queried data skew in the TPCDS, and a right figure represents a correspondence between a data skew and an execution duration. It can be seen from FIG. 5 that a considerable part of long execution durations of queries is related to data skew. Therefore, if the problem of data skew is processed, query efficiency can be effectively improved.

Based on the above, the embodiments of the disclosure provide a schematic flowchart of a data table processing method for a DDB. For two data tables that need to be joined, in a case that most of data distribution manners are kept unchanged, data in the two data tables is redistributed based on different data distribution through manners of partial replication, partial redistribution, and partial keeping unchanged (keep local), thereby resolving the problem of data skew.

The data table processing method for a DDB according to the embodiments of the disclosure is described in detail below.

In some or all embodiments, because a data skew situation is very complex, in the embodiments of the disclosure, the data skew situation is processed through the following several categories.
1) Distribution keys of two to-be-joined data tables (or join results) are not join keys, and a join key of one of the data tables (or join results) includes an MCV.
2) Distribution keys of two to-be-joined data tables (or join results) are not join keys, join keys of the two data tables (or join results) both include an MCV (that is, a value that has occurred in a column more than a threshold number of times, corresponding to the foregoing most common data), and the MCVs do not overlap.
3) Distribution keys of two to-be-joined data tables (or join results) are not join keys, the join keys of the two data tables (or join results) both include MCVs, and the MCVs overlap.
4) A distribution key of one of the data tables (or a join result) is a join key, a distribution key of the other data table (or the join result) is not the join key, and a data table on one side (or a join result) where the distribution key is the join key includes the MCV.
5) A distribution key of one data table (or a join result) is a join key, a distribution key of the other data table (or a join result) is not a join key, and a data table on one side (or a join result) where the distribution key is not the join key includes the MCV.

The foregoing 5 cases are respectively specifically described below.

In some or all embodiments, FIG. 6 is a schematic principle diagram of a data table processing method for a DDB provided in the related art. As shown in FIG. 6, for a case where distribution keys of data tables (or join results) on both join sides are not join keys, and a join key of the data table (or the join result) on one side includes an MCV, the MCV is distributed to the same node when distribution is performed based on a hash function.

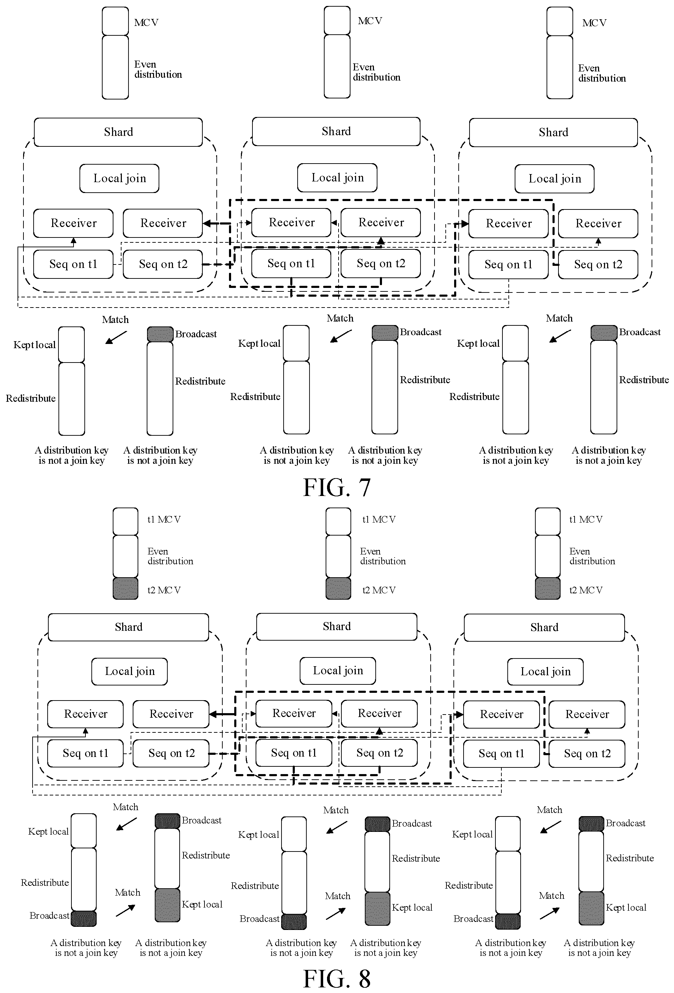

Exemplarily, FIG. 7 is a schematic principle diagram of a data table processing method for a DDB according to an embodiment of the disclosure. As shown in FIG. 7, it is assumed that a left table includes an MCV. For the foregoing case, an improvement scheme provided in this embodiment of the disclosure includes the following several parts. Processing of the MCV: For a data table on one side including the MCV, since the distribution key is not the join key, it may be basically assumed that the MCVs are evenly distributed across a plurality of nodes. Therefore, the MCVs may not be redistributed, and data matching the MCV in a database on the other side is broadcast to all nodes. For example, it is assumed that MCVs (1, 3, 5) are kept local in the data table on a left side, (1, 3, 5) in the data table on a right side needs to be replicated to all nodes. This practice has the following several advantages. The first advantage is that MCVs are not redistributed to avoid data skew as a result of redistribution of a large amount of most common data to the same node. The second advantage is that the redistribution is not performed due to a relatively large volume of data of the MCVs, so that data movement may be reduced. In addition, for processing of non-MCVs, since the non-MCVs are evenly distributed, the non-MCVs may be redistributed based on the join key, or data on one side remains unchanged, and data on the other side is replicated to all nodes, to ensure an even distribution.

The same value on any side needs to correspond to all matched values on the other side. When polling and distribution are performed on one side, it may be ensured that the data distribution is even. Since the data on the other side is replicated, it may be ensured that the same value can be matched only once, thereby ensuring correctness of the data. In addition, since it needs to be ensured that all data having a join relationship has an opportunity to be joined, for MCVs which are kept local on one side and subjected to full node replication on the other side, it can be ensured that all same values in a join column have the opportunity to be joined. For other values, all values are redistributed to the same node. Therefore, the same value in the join column also has an opportunity to be joined. Therefore, although a replicated value, a kept local value, and a distribution value appear at the same time in the join column, it can be ensured that the same value in the join column has an opportunity to be joined, thereby ensuring correctness of a set of results.

In some other or all embodiments, FIG. 8 is a schematic principle diagram of a data table processing method for a DDB according to an embodiment of the disclosure. As shown in FIG. 8, for a case where none of distribution keys of data tables (or join results) on both join sides are join keys, the join keys of data tables (or join results) on two sides both include MCVs, and the MCVs do not overlap, an improvement scheme provided in this embodiment of the disclosure includes the following several parts. Processing of the MCV: For the MCVs on two sides, since the join key is not the distribution key, and the MCVs do not overlap, the MCVs on a current side may also be kept local, and data matching the MCVs on an opposite side needs to be replicated to all nodes. For example, assuming that MCVs included in a data table on a left side are (1, 3, 5), and MCVs included in a data table on a right side are (2, 4), the MCVs (1, 3, 5) in the data table on the left side may be kept local, and (1, 3, 5) in the data table on the right side is replicated to all nodes. Similarly, for the data table on the right side, after the MCVs (2, 4) are kept local, (2, 4) in the data table on the left side need to be replicated to all nodes. For processing of non-MCVs, since the non-MCVs are evenly distributed, the non-MCVs may be redistributed across all the nodes based on join keys, so as to ensure an even distribution.

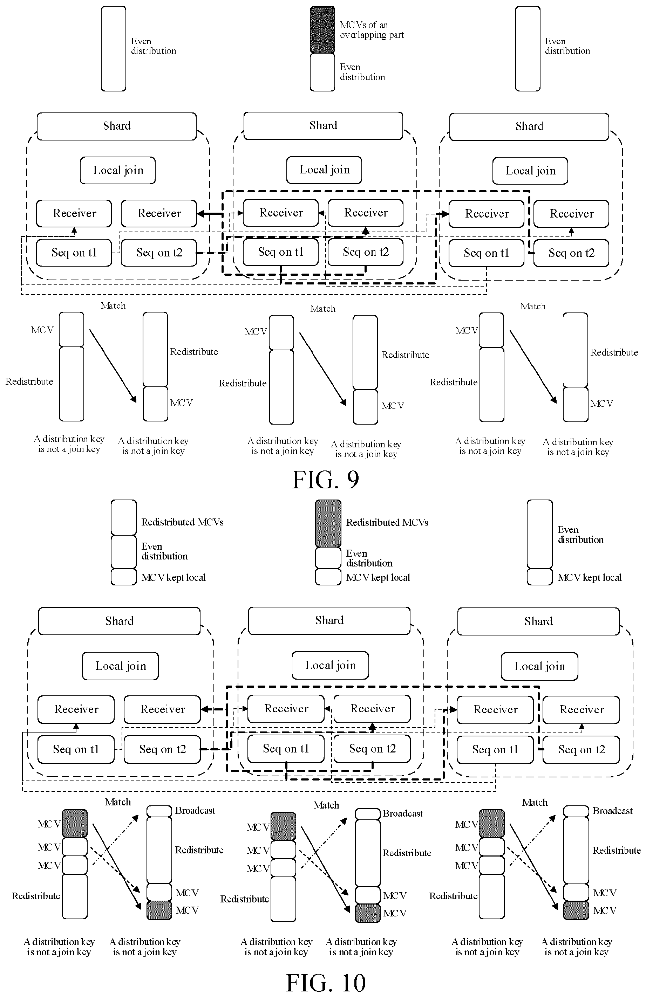

In some or all embodiments, FIG. 9 is a schematic principle diagram of a data table processing method for a DDB provided in the related art. As shown in FIG. 9, for a case where distribution keys of data tables on both join sides (or join results) are not join keys, the join keys of the data tables on both sides (or join results) include MCVs, and an overlap exists between the MCVs, redistribution of the MCVs may lead to a data bloat at a certain node, causing a typical problem of data skew. Replication of the MCVs may lead to an excessively large volume of replicated data. In addition, a volume of data processed by each node may also be enlarged.

Exemplarily, FIG. 10 is a schematic principle diagram of a data table processing method for a DDB according to an embodiment of the disclosure. As shown in FIG. 10, for the foregoing case, an improvement scheme provided in this embodiment of the disclosure includes the following several parts. Processing of the MCV: For MCVs on two sides, since join keys are not distribution keys and overlap, redistribution or data replication has limitations. Therefore, data redistribution is performed on the MCVs of an overlapping part. For example, the MCVs of the overlapping part are redistributed across different nodes according to a rule, so that the MCVs are transmitted to different nodes for processing. In this way, during making of an execution plan, the MCVs are redistributed, so that a data distribution is substantially balanced to ensure that a volume of data processed by each node is substantially even. In other words, the advantage of rearrangement is that after the data distribution is rearranged, the volume of data processed by each node is as balanced as possible, thereby reducing impact of data skew.

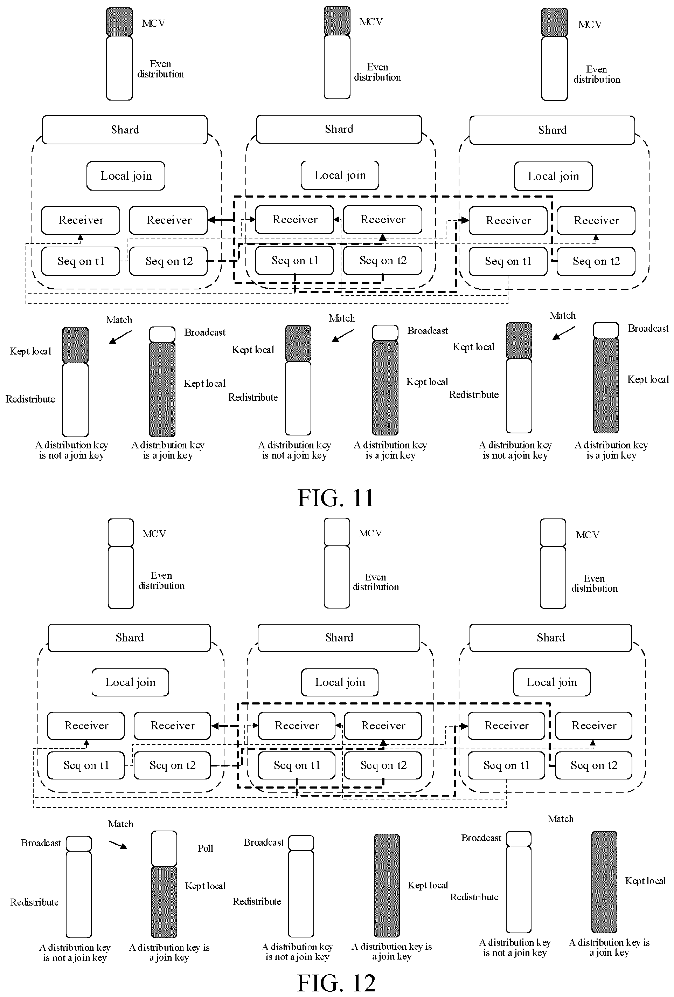

In some other or all embodiments, FIG. 11 is a schematic principle diagram of a data table processing method for a DDB according to an embodiment of the disclosure. As shown in FIG. 11, for a case where a distribution key of a data table (or a join result) on one side is a join key, and a data table on one side (or a join result) where the join key is not the distribution key includes an MCV, an improvement scheme provided in this embodiment of the disclosure mainly includes the following several parts. Processing of the MCV: The MCVs in the data table on one side (or the join result) where the join key is the distribution key are kept local. Data matching the MCVs in the data table on one side (or the join result) where the join key is not the distribution key needs to be replicated to all nodes. For processing of non-MCVs, since the non-MCVs are evenly distributed, the non-MCVs in the data table on one side where the distribution key is the join key may be kept local, and the non-MCVs in the data table on the other side are redistributed based on the join key.

In some or all embodiments, FIG. 12 is a schematic principle diagram of a data table processing method for a DDB according to an embodiment of the disclosure. As shown in FIG. 12, for a case where a distribution key of a data table (or a join result) on one side is a join key, and a data table on one side (or a join result) where the distribution key is the join key includes an MCV, an improvement scheme provided in this embodiment of the disclosure mainly includes the following several parts. Processing of the MCV: Polling and replication are performed on an MCV in a data table (or a join result) on a side where the distribution key is the join key. To be specific, a first piece of data is transmitted to a first node, a second piece of data is transmitted to a second node, and so on, thereby ensuring an even distribution of data. Data that matches the MCV in a data table on one side (or a join result) where the distribution key is not the join key needs to be replicated to all nodes. For processing of non-MCVs, due to the even distribution, the non-MCVs in the data table on one side (or the join result) where the distribution key is the join key may be kept local, and non-MCVs on the other side are redistributed based on the join key.

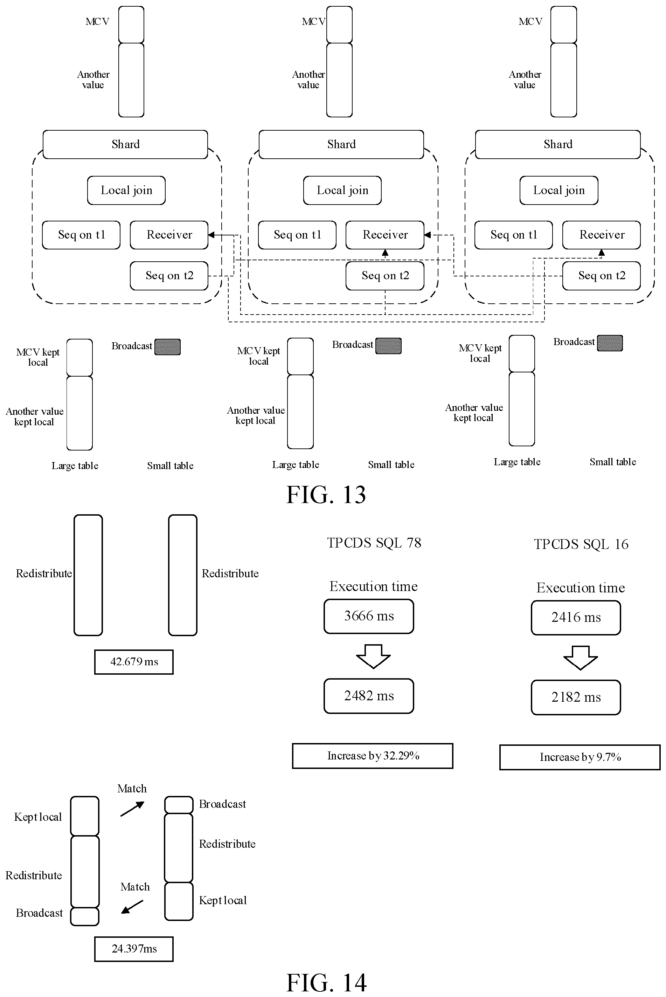

In some other or all embodiments, FIG. 13 is a schematic principle diagram of a data table processing method for a DDB according to an embodiment of the disclosure. As shown in FIG. 13, if a data table on one side is particularly large and a data table on the other side is particularly small, data on one side of a small table may be directly replicated to all nodes in a case that costs of replicating data in a small table to all nodes are low.

Beneficial effects of the data table processing method for a DDB provided in the embodiments of the disclosure are described below combined with experimental data.

Exemplarily, FIG. 14 is a schematic diagram of a comparison of effects according to an embodiment of the disclosure. As shown in FIG. 14, a typical scenario of a TPCDS is tested in this embodiment of the disclosure. For a case in which a data skew exists, the technical solutions (that is, a solution of partial replication, partial redistribution, and partial keeping unchanged) provided in this embodiment of the disclosure are all improved to some extent compared with the technical solutions (that is, a solution of redistribution or replication solution) provided in the related art. For example, for a structured query language (SQL) 78, an execution time is shortened from 3666 milliseconds to 2482 milliseconds. For an SQL 16, an execution time is shortened from 2416 milliseconds to 2182 milliseconds.

An exemplary structure in which the data table processing apparatus 643 of a DDB provided in this embodiment of the disclosure is implemented as a software module is further described below. In some or all embodiments, as shown in FIG. 2, the software module stored into the data table processing apparatus 643 of a DDB of the memory 640 may include an obtaining module 6431, an operation module 6432, and a join module 6433.

The obtaining module 6431 is configured to obtain a first data table and a second data table that are to be joined in the DDB, first data in the first data table and second data in the second data table being distributed and stored into the plurality of nodes. The obtaining module 6431 is further configured to obtain a first data distribution of the first data and a second data distribution of the second data. The operation module 6432 is configured to perform, based on the first data distribution and the second data distribution, operations of partial replication, partial redistribution, and partial keeping unchanged on full data including the first data and the second data, to obtain corresponding treated first data and treated second data. obtain corresponding treated first data and treated second data. The join module 6433 is configured to perform a join operation on the treated first data and the treated second data, to obtain a join result.

In some or all embodiments, the data table processing apparatus 643 of a DDB further includes a determination module 6434, which is configured to determine, based on the first data distribution and the second data distribution, third data for performing a replication operation in the full data including the first data and the second data, fourth data for performing a redistribution operation in the full data, and fifth data kept unchanged in the full data. The operation module 6432 is further configured to perform the replication operation on the third data, perform the redistribution operation on the fourth data, and keep the fifth data unchanged.

In some or all embodiments, the determination module 6434 is further configured to perform the following processes in response to a distribution key of one of the first data table and the second data table being a join key, and data corresponding to the join key in one of the data tables including most common data, the most common data being data that has occurred more than a threshold number of times: using, as the third data for performing the replication operation, data in a non-target data table that matches the most common data, the non-target data table being a data table that does not include the most common data in the first data table and the second data table; using, as the fourth data for performing the redistribution operation, data in a target data table other than the most common data and data in the non-target data table other than the data matching the most common data, the target data table being a data table including the most common data in the first data table and the second data table; and using the most common data as the fifth data kept unchanged.

In some or all embodiments, the determination module 6434 is further configured to perform the following processes in response to a distribution key in each of the first data table and the second data table being not a join key, data corresponding to the join key in the first data table including first most common data, data corresponding to the join key in the second data table including second most common data, the first most common data being data that has occurred more than a threshold number of times in the first data table, the second most common data being data that has occurred more than the threshold number of times in the second data table, and no overlap existing between the first most common data and the second most common data: using, as the third data for performing the replication operation, the data in the first data table that matches the second most common data and the data in the second data table that matches the first most common data; using, as the fourth data for performing the redistribution operation, data in the first data table other than the first most common data and the data that matches the second most common data, and data in the second data table other than the second most common data and the data that matches the first most common data; and using the first most common data and the second most common data as the fifth data kept unchanged.

In some or all embodiments, the determination module 6434 is further configured to perform the following processes in response to a distribution key of one of the first data table and the second data table being a join key, a distribution key of the other data table being not the join key, and data corresponding to the join key in a non-target data table including most common data, the non-target data table being a data table in which the distribution key in each of the first data table and the second data table is not the join key, and the most common data being data that has occurred in the non-target data table more than a threshold number of times: using, as the third data for performing the replication operation, data in a target data table that matches the most common data, the target data table being a data table in which the distribution key in the first data table and the second data table is the join key; using data in the non-target data table other than the most common data as the fourth data for performing the redistribution operation; and using, as the fifth data kept unchanged, the most common data and data in the target data table other than the data that matches the most common data.

In some or all embodiments, the operation module 6432 is further configured to: replicate the third data to each of the nodes; redistribute the fourth data among the plurality of nodes based on the join key; and keep a distribution manner of the fifth data in the plurality of nodes unchanged.

In some or all embodiments, the determination module 6434 is further configured to perform the following processes in response to a distribution key in each of the first data table and the second data table being not a join key, data corresponding to the join key in the first data table including first most common data, data corresponding to the join key in the second data table including second most common data, and an overlap existing between the first most common data and the second most common data: using, as the third data for performing the replication operation, data in the first data table and the second data table that matches the most common data in a non-overlapping part; using most common data of an overlapping part and remaining data in the first data table and the second data table as the fourth data for performing the redistribution operation, the remaining data being data in the first data table and the second data table other than the first most common data, the second most common data, and the data that matches the most common data of the non-overlapping part; and using the most common data of the non-overlapping part as the fifth data kept unchanged.

In some or all embodiments, the operation module 6432 is further configured to: replicate the third data to each of the nodes; redistribute the most common data of the overlapping part in the fourth data to the plurality of nodes, to cause the most common data of the overlapping part to be evenly distributed in the plurality of nodes, and redistribute the remaining data in the fourth data among the plurality of nodes based on the join key; and keep a distribution manner of the fifth data in the plurality of nodes unchanged.

In some or all embodiments, the determination module 6434 is further configured to perform the following processes in response to a distribution key of one of the first data table and the second data table being a join key, a distribution key of the other data table being not the join key, and data corresponding to the join key in a target data table including most common data, the target data table being a data table in which the distribution key in each of the first data table and the second data table is the join key, and the most common data being data that has occurred in the target data table more than a threshold number of times: using, as third data for performing a replication operation, the most common data and data in a non-target data table that matches the most common data, the non-target data table being a data table in which the distribution key in each of the first data table and the second data table is not a join key; using, as fourth data for performing a redistribution operation, data in the non-target data table other than the data that matches the most common data; and using data in the target data table other than the most common data as fifth data that remains unchanged.

In some or all embodiments, the operation module 6432 is further configured to: perform polling and replication on the most common data in the third data, and replicate, to each of the nodes, data in the third data that matches the most common data; redistribute the fourth data among the plurality of nodes based on the join key; and keep a distribution manner of the fifth data in the plurality of nodes unchanged.

In some or all embodiments, the operation module 6432 is further configured to let n be an integer variable whose value increases from 1, a maximum value of n being N, N being a total quantity of pieces of data included in the most common data, and iterate n to perform the following processing: determine a remainder obtained by dividing n by M, replicate an n^{th} piece of data to a node corresponding to the remainder in the plurality of nodes, M being a total quantity of the plurality of nodes, and replicate data corresponding to the remainder to an M^{th} node when the remainder is 0.

In some or all embodiments, the operation module 6432 is further configured to replicate, to each of the nodes in response to a volume of data of one of the first data table and the second data table being greater than a data volume threshold and a data volume of the other data table being less than the data volume threshold, data in the data table whose data volume is less than the data volume threshold.

The description of the apparatus in the embodiments of the disclosure is similar to the description of the foregoing method embodiment, and has similar beneficial effects as the method embodiment. Therefore, details are not described. Technical details not mentioned in the data table processing apparatus of a DDB provided in the embodiments of the disclosure may be understood according to descriptions of any one of FIG. 3 or FIG. 4.

An embodiment of the disclosure provides a computer program product, the computer program product including a computer program or a computer-executable instruction, the computer program or the computer-executable instruction being stored in a computer-readable storage medium. A processor of a computer device reads the computer-executable instruction from the computer-readable storage medium, the processor executing the computer-executable instruction, to cause the computer device to perform the foregoing data table processing method for a DDB provided in the embodiments of the disclosure.

An embodiment of the disclosure provides a computer-readable storage medium, having a computer-executable instruction stored therein, the computer-executable instruction, when executed by a processor, causing the processor to perform the data table processing method for a DDB in the embodiments of the disclosure, for example, the data table processing method for a DDB shown in FIG. 3 or FIG. 4.

In some or all embodiments, the computer-readable storage medium may be a memory such as a ferromagnetic random access memory (FRAM), a ROM, a programmable random access memory (PROM), an erasable programmable random access memory (EPROM), an electrically erasable programmable random access memory (EEPROM), a flash memory, a magnetic surface memory, a compact disc, or a compact disc random access memory (CD-ROM), or may be various devices including one of or any combination of the foregoing memories.

In some or all embodiments, the executable instruction may adopt any form such as a program, a software, a software module, a script, or a code, may be written in a programming language of any form (including a compiled or interpreted language, or a declarative or procedural language), and may be deployed in any form, for example, deployed as a standalone program or as a module, a component, a subroutine, or another unit suitable for use in a computing environment.

In an example, the executable instructions may be deployed to be executed on one electronic device, or executed on a plurality of electronic devices located at one location, or executed on a plurality of electronic devices distributed at a plurality of locations and joined through a communication network.

The foregoing descriptions are only an example of the disclosure and are not intended to limit the scope of protection of the disclosure. Any modification, equivalent replacement, or improvement made within the spirit and principle of the disclosure falls within the protection scope of the disclosure.

## Claims

1. A data table processing method for a distributed database, DDB, executable by an electronic device, the DDB comprising a plurality of nodes, the method comprising:
obtaining a first data table and a second data table, first data in the first data table and second data in the second data table being stored at the plurality of nodes;
obtaining a first data distribution of the first data in the first data table and a second data distribution of the second data in the second data table;
performing, based on the first data distribution and the second data distribution, replication and/or redistribution, and/or keeping unchanged on the first data and the second data, to obtain correspondingly treated first data and treated second data, respectively; and
combining the treated first data and the treated second data, to obtain a set of combined data.

2. The method according to claim 1, wherein the performing, based on the first data distribution and the second data distribution, replication and/or redistribution, and/or keeping unchanged on the first data and the second data comprises:
determining, based on the first data distribution and the second data distribution, third data for performing a replication operation in full data comprising the first data and the second data, fourth data for performing a redistribution operation in the full data, and fifth data kept unchanged in the full data; and
performing the replication operation on the third data, performing the redistribution operation on the fourth data, and keeping the fifth data unchanged.

3. The method according to claim 2, wherein the determining, based on the first data distribution and the second data distribution, third data for performing a replication operation in full data comprising the first data and the second data, fourth data for performing a redistribution operation in the full data, and fifth data kept unchanged in the full data comprises:
in response to a distribution key of each of the first data table and the second data table not being a join key, and data corresponding to the join key in one of the first data table and the second data table comprising most common data that has occurred more than a threshold number of times:
using, as the third data, data in a non-target data table that matches the most common data, the non-target data table being a data table that does not comprise the most common data in the first data table and the second data table;
using, as the fourth data, data in a target data table other than the most common data and data in the non-target data table other than the data matching the most common data, the target data table being a data table comprising the most common data in the first data table and the second data table; and
using the most common data as the fifth data.

4. The method according to claim 2, wherein the determining, based on the first data distribution and the second data distribution, third data for performing a replication operation in full data comprising the first data and the second data, fourth data for performing a redistribution operation in the full data, and fifth data kept unchanged in the full data comprises:
in response to a distribution key of each of the first data table and the second data table not being a join key, data corresponding to the join key in the first data table comprising first most common data, data corresponding to the join key in the second data table comprising second most common data, the first most common data being data that has occurred more than a threshold number of times in the first data table, the second most common data being data that has occurred more than the threshold number of times in the second data table, and no overlap existing between the first most common data and the second most common data:
using, as the third data, the data in the first data table that matches the second most common data and the data in the second data table that matches the first most common data;
using, as the fourth data, data in the first data table other than the first most common data and the data that matches the second most common data, and data in the second data table other than the second most common data and the data that matches the first most common data; and
using the first most common data and the second most common data as the fifth data.

5. The method according to claim 2, wherein the determining, based on the first data distribution and the second data distribution, third data for performing a replication operation in full data comprising the first data and the second data, fourth data for performing a redistribution operation in the full data, and fifth data kept unchanged in the full data comprises:
in response to a first distribution key in one of the first data table and the second data table being a join key, a second distribution key of the other data table not being the join key, and data corresponding to the join key in a non-target data table comprising most common data, the non-target data table being a data table from among the first data table and the second data table in which the second distribution key is not the join key, and the most common data being data that has occurred in the non-target data table more than a threshold number of times:
using, as the third data, data in a target data table that matches the most common data, the target data table being a data table from among the first data table and the second data table in which the first distribution key is the join key;
using data in the non-target data table other than the most common data as the fourth data; and
using, as the fifth data, the most common data and data in the target data table other than the data that matches the most common data.

6. The method according to any one of claims 2 to 5, wherein the performing the replication operation on the third data, performing the redistribution operation on the fourth data, and keeping the fifth data unchanged comprises:
replicating the third data to each of the plurality of nodes;
redistributing the fourth data among the plurality of nodes based on the join key; and
keeping a distribution manner of the fifth data in the plurality of nodes unchanged.

7. The method according to claim 2, wherein the determining, based on the first data distribution and the second data distribution, third data for performing a replication operation in full data comprising the first data and the second data, fourth data for performing a redistribution operation in the full data, and fifth data kept unchanged in the full data comprises:
in response to a distribution key in each of the first data table and the second data table not being a join key, data corresponding to the join key in the first data table comprising first most common data, data corresponding to the join key in the second data table comprising second most common data, and an overlap existing between the first most common data and the second most common data:
using, as the third data for performing the replication operation, data in the first data table and the second data table that matches most common data in a non-overlapping part;
using most common data of an overlapping part and remaining data in the first data table and the second data table as the fourth data for performing the redistribution operation, the remaining data being data in the first data table and the second data table other than the first most common data, the second most common data, and the data that matches the most common data of the non-overlapping part; and
using the most common data of the non-overlapping part as the fifth data kept unchanged.

8. The method according to claim 7, wherein the performing the replication operation on the third data, performing the redistribution operation on the fourth data, and keeping the fifth data unchanged comprises:
replicating the third data to each of the plurality of nodes;
redistributing the most common data of the overlapping part in the fourth data to the plurality of nodes, to cause the most common data of the overlapping part to be evenly distributed in the plurality of nodes;
redistributing the remaining data in the fourth data among the plurality of nodes based on the join key; and
keeping a distribution manner of the fifth data in the plurality of nodes unchanged.

9. The method according to claim 2, wherein the determining, based on the first data distribution and the second data distribution, third data for performing a replication operation in full data comprising the first data and the second data, fourth data for performing a redistribution operation in the full data, and fifth data kept unchanged in the full data comprises:
in response to a first distribution key in one of the first data table and the second data table being a join key, a second distribution key of the other data table not being the join key, and data corresponding to the join key in a target data table comprising most common data, the target data table being a data table from among the first data table and the second data table in which the first distribution key is the join key, and the most common data being data that has occurred in the target data table more than a threshold number of times:
using, as third data, the most common data and data in a non-target data table that matches the most common data, the non-target data table being a data table from among the first data table and the second data table in which the second distribution key is not a join key;
using, as fourth data, data in the non-target data table other than the data that matches the most common data; and
using data in the target data table other than the most common data as fifth data.

10. The method according to claim 9, wherein the performing the replication operation on the third data, performing the redistribution operation on the fourth data, and keeping the fifth data unchanged comprises:
performing polling and replication on the most common data in the third data, and replicating, to each of the plurality of nodes, data in the third data that matches the most common data;
redistributing the fourth data among the plurality of nodes based on the join key; and
keeping a distribution manner of the fifth data in the plurality of nodes unchanged.

11. The method according to claim 10, wherein the performing polling and replication on the most common data in the third data comprises:
letting n be an integer variable whose value increases from 1, a maximum value of n being N, N being a total quantity of pieces of data comprised in the most common data, and iterating n to perform the following processing:
determining a remainder obtained by dividing n by M, replicating an n^{th} piece of data to a node corresponding to the remainder in the plurality of nodes, M being a total quantity of the plurality of nodes, and replicating data corresponding to the remainder to an M^{th} node when the remainder is 0.

12. The method according to any one of claims 1 to 11, further comprising:
replicating, to each of the plurality of nodes in response to a data volume of one of the first data table and the second data table being greater than a data volume threshold and a data volume of the other data table being less than the data volume threshold, data in the data table whose data volume is less than the data volume threshold.

13. A data table processing apparatus for a distributed database, DDB, the DDB comprising a plurality of nodes, the apparatus comprising:
an obtaining module, configured to obtain a first data table and a second data table, first data in the first data table and second data in the second data table being stored at the plurality of nodes;
the obtaining module being further configured to obtain a first data distribution of the first data in the first data table and a second data distribution of the second data in the second data table;
an operation module, configured to perform, based on the first data distribution and the second data distribution, replication and/or redistribution, and/or keeping unchanged on the first data and the second data, to obtain correspondingly treated first data and treated second data, respectively; and
a join module, configured to combine the treated first data and the treated second data, to obtain a set of combined data.

14. An electronic device, comprising:
a memory, configured to store an executable instruction; and
a processor, configured to implement the data table processing method for a distributed database, DDB, according to any one of claims 1 to 12 when executing the executable instruction stored in the memory.

15. A computer-readable storage medium, having a computer-executable instruction stored therein, the computer-executable instruction, when executed by a processor, implementing the data table processing method for a distributed database, DDB, according to any one of claims 1 to 12.

16. A computer program product, comprising a computer program or a computer-executable instruction, the computer program or the computer-executable instruction, when executed by a processor, implementing the data table processing method for a distributed database, DDB, according to any one of claims 1 to 12.
